# EUROPÄISCHE PATENTSCHRIFT

(11) **EP 3 445 957 B1**
(45) Veröffentlichungstag und Bekanntmachung des Hinweises auf die Patenterteilung: **24.07.2019**
(21) Anmeldenummer: 17718527.9
(22) Anmeldetag: 20.04.2017
(51) Int. Cl.: F01M 5/00, F01M 11/00, F16H 57/04

(54) **ANTRIEBSKOMPONENTE FÜR EIN KRAFTFAHRZEUG SOWIE KRAFTFAHRZEUG**
DRIVE COMPONENT FOR A MOTOR VEHICLE, AND MOTOR VEHICLE
COMPOSANT D'ENTRAÎNEMENT POUR VÉHICULE AUTOMOBILE ET VÉHICULE AUTOMOBILE

(30) Priorität: 22.04.2016 DE 102016206841
(43) Veröffentlichungstag der Anmeldung: 27.02.2019
(73) Patentinhaber: Audi AG, 85045 Ingolstadt (DE)
(72) Erfinder: GRAF, Philip, 70806 Kornwestheim (DE); KOPP, Andreas, 85092 Kösching (DE)
(86) Internationale Anmeldenummer: PCT/EP2017/059439
(87) Internationale Veröffentlichungsnummer: WO 2017/182587

(56) Entgegenhaltungen:
- WO-A1-2012/035426
- DE-A1- 4 431 105
- DE-A1-102008 059 619
- US-A1- 2009 020 366

## Beschreibung

Die Erfindung betrifft eine Antriebskomponente für ein Kraftfahrzeug gemäß dem Oberbegriff von Patentanspruch 1 sowie ein Kraftfahrzeug mit einer solchen Antriebskomponente.

Eine solche Antriebskomponente für ein Kraftfahrzeug ist beispielsweise bereits der DE 44 31 105 A1 als bekannt zu entnehmen. Die Antriebskomponente weist wenigstens einen Aufnahmeraum für Bauelemente der Antriebskomponente auf, wobei der Aufnahmeraum beispielsweise durch ein Gehäuse der Antriebskomponente gebildet ist. Bei den Bauelementen handelt es sich beispielsweise um leistungsübertragende Elemente, welche relativ zueinander und/oder relativ zu dem Gehäuse bewegbar sein können. Die Antriebskomponente weist wenigstens eine den Aufnahmeraum zumindest teilweise begrenzende erste Wandung auf, welche beispielsweise durch das Gehäuse beziehungsweise durch ein Gehäuseelement des Gehäuses gebildet ist. Durch die Wandung beziehungsweise von der Wandung ist wenigstens ein Sammelbereich zum Sammeln eines Schmiermittels zum Schmieren der Bauelemente zumindest teilweise begrenzt. Dies bedeutet, dass die Bauelemente während eines Betriebs der Antriebskomponente mit dem beispielsweise als Öl beziehungsweise Schmieröl ausgebildeten Schmiermittel versorgt und dadurch geschmiert und/oder gekühlt werden, um den Verschleiß der Bauelemente besonders gering zu halten. Nach dem Kühlen und/oder Schmieren der Bauelemente kann das Schmiermittel von den Bauelementen abströmen und sich beispielsweise in dem Sammelbereich sammeln, wodurch sich beispielsweise in dem Sammelbereich ein Sumpf des Schmiermittels bildet. Handelt es sich bei dem Schmiermittel um Öl, so ist der Sumpf beispielsweise als Ölsumpf ausgebildet.

Die Antriebskomponente weist ferner wenigstens eine zweite Wandung auf, welche auf einer dem Sammelbereich abgewandten Seite der ersten Wandung angeordnet ist. Beispielsweise ist die zweite Wandung durch das Gehäuse beziehungsweise durch ein Gehäuseelement des Gehäuses gebildet. Die zweite Wandung ist zumindest in einem Teilbereich von der ersten Wandung beabstandet, sodass zwischen den Wandungen ein zumindest teilweise durch die Wandungen begrenzter Zwischenraum gebildet ist. Bei dem Zwischenraum handelt es sich beispielsweise um einen Spalt, welcher sich zwischen den Wandungen erstreckt und einerseits durch die erste Wandung und andererseits durch die zweite Wandung begrenzt ist.

Dabei ist zum Einstellen eines Wärmeübergangs beziehungsweise eines Wärmeübergangskoeffizienten zwischen den Wandungen eine Flüssigkeit in den Zwischenraum einbringbar und aus dem Zwischenraum abführbar. Mit anderen Worten kann zumindest ein Teil des Zwischenraums mit der Flüssigkeit gespült werden, sodass zumindest in einem Teil des Zwischenraums die Flüssigkeit aufgenommen ist. Dadurch ist beispielsweise ein erster Wärmeübergangskoeffizient in dem Zwischenraum und somit zwischen den Wandungen eingestellt beziehungsweise gebildet.

Ist die Flüssigkeit aus dem Zwischenraum abgeführt, sodass beispielsweise in den Zwischenraum keine Flüssigkeit aufgenommen ist, so ist der Zwischenraum beispielsweise ein Luftspalt. Hierdurch ist beispielsweise in dem Zwischenraum und somit zwischen den Wandungen ein zweiter Wärmeübergangskoeffizient eingestellt beziehungsweise gebildet. Der zweite Wärmeübergangskoeffizient ist beispielsweise geringer als der erste Wärmeübergangskoeffizient, insbesondere dann, wenn die Flüssigkeit ein Öl wie beispielsweise das zuvor genannte Schmieröl ist.

Des Weiteren offenbart die DE 199 38 688 A1 ein Verfahren zum Regeln einer Kühlung von Schmieröl in einer Ölwanne einer Antriebsmaschine mit Druckumlaufschmierung, wobei das Öl in einer Ölwanne gesammelt wird, welche wenigstens teilweise doppelwandig ausgebildet ist. Dabei ist es vorgesehen, dass bei erhöhtem Kühlbedarf das Schmieröl in dem doppelwandigen Bereich der Ölwanne zirkulierend gefördert wird und dass bei niedrigem Kühlbedarf das Schmieröl in den doppelwandigen Bereich der Ölwanne im Wesentlichen ruhend gehalten wird.

Außerdem ist aus der US 4,296,716 ein Verbrennungsmotor für ein Kraftfahrzeug bekannt, mit einer Ölwanne, welche in zwei Kammern unterteilt ist.

Aufgabe der vorliegenden Erfindung ist es, eine Antriebskomponente sowie ein Kraftfahrzeug der eingangs genannten Art derart weiterzuentwickeln, dass sich eine besonders bedarfsgerechte sowie besonders einfache Einstellung des Wärmeübergangskoeffizienten zwischen den Wandungen realisieren lässt.

Diese Aufgabe wird durch eine Antriebskomponente mit den Merkmalen des Patentanspruchs 1 sowie durch ein Kraftfahrzeug mit den Merkmalen des Patentanspruchs 10 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Antriebskomponente für ein Kraftfahrzeug, insbesondere einen Kraftwagen wie beispielsweise einen Personenkraftwagen. Die Antriebskomponente weist wenigstens einen Aufnahmeraum für Bauelemente der Antriebskomponente auf. Beispielsweise ist der Aufnahmeraum durch ein Gehäuse der Antriebskomponente begrenzt. Bei den Bauelementen handelt es sich beispielsweise um leistungsübertragende Elemente, welche beispielsweise relativ zueinander und/oder relativ zu dem Gehäuse bewegbar sein können.

Die Antriebskomponente weist ferner wenigstens eine den Aufnahmeraum zumindest teilweise begrenzende erste Wandung auf, welche beispielsweise durch das Gehäuse beziehungsweise durch ein Gehäuseelement des Gehäuses gebildet ist. Durch die erste Wandung beziehungsweise von der ersten Wandung ist wenigstens ein Sammelbereich zum Sammeln eines Schmiermittels zum Schmieren der Bauelemente zumindest teilweise begrenzt. Beispielsweise während eines Betriebs der Antriebskomponente werden die Bauelemente mit dem beispielsweise als Öl beziehungsweise Schmieröl ausgebildeten Schmiermittel versorgt, wodurch die Bauelemente gekühlt und/oder geschmiert werden. Nach dem Versorgen der Bauelemente mit dem Schmiermittel kann das Schmiermittel beispielsweise von den Bauelementen abströmen und sich in dem Sammelbereich sammeln. Hierdurch bildet das Schmiermittel beispielsweise in dem Sammelbereich einen Sumpf, welcher beispielsweise dann, wenn das Schmiermittel ein Öl ist, auch als Ölsumpf bezeichnet wird.

Beispielsweise mittels wenigstens einer Pumpe kann das Schmiermittel aus dem Sammelbereich gefördert und dann beispielsweise zurück zu den Bauelementen gefördert werden, wodurch die Bauelemente wieder mit dem Schmiermittel versorgt werden können.

Die Antriebskomponente umfasst ferner wenigstens eine zweite Wandung, welche beispielsweise durch das Gehäuse beziehungsweise durch ein Gehäuseelement des Gehäuses gebildet ist. Die zweite Wandung ist dabei auf einer dem Sammelbereich abgewandten Seite der ersten Wandung angeordnet. Ferner ist die zweite Wandung zumindest in einem Teilbereich von der ersten Wandung beabstandet, sodass zwischen den Wandungen ein zumindest teilweise durch die Wandungen begrenzter Zwischenraum gebildet ist. Der Zwischenraum ist beispielsweise ein Spalt, welcher sich zwischen den Wandungen erstreckt und einerseits durch die erste Wandung und andererseits durch die zweite Wandung begrenzt ist.

Dabei ist zum Einstellen eines Wärmeübergangs beziehungsweise eines Wärmeübergangskoeffizienten zwischen den Wandungen eine Flüssigkeit in den Zwischenraum einbringbar und aus dem Zwischenraum abführbar. Dies bedeutet, dass der Zwischenraum mit der Flüssigkeit geflutet werden kann, sodass zumindest in einem Teil des Zwischenraums die Flüssigkeit aufgenommen beziehungsweise angeordnet ist. Dadurch ist beispielsweise ein erster Wärmeübergang beziehungsweise ein erster Wärmeübergangskoeffizient zwischen den Wandungen eingestellt.

Durch das Abführen der Flüssigkeit aus dem Zwischenraum ist in dem Zwischenraum beziehungsweise in dem zuvor genannten Teil des Zwischenraums die Flüssigkeit nicht aufgenommen beziehungsweise angeordnet, sodass dann der Zwischenraum beispielsweise als Luftspalt ausgebildet ist. Hierdurch ist beispielsweise ein zweiter Wärmeübergang beziehungsweise ein zweiter Wärmeübergangskoeffizient zwischen den Wandungen gebildet. Beispielsweise ist der zweite Wärmeübergangskoeffizient geringer als der erste Wärmeübergangskoeffizient. Durch Einstellen des zweiten Wärmeübergangskoeffizienten zwischen den Wandungen kann das beispielsweise im Sammelbereich aufgenommene Schmiermittel über den Zwischenraum von der zweiten Wandung und insbesondere von einer Umgebung der zweiten Wandung isoliert werden, sodass beispielsweise ein übermäßiger Wärmeübergang von dem sich im Sammelbereich befindenden Schmiermittel über die erste Wandung an die zweite Wandung vermieden werden kann. Dadurch kann beispielsweise eine schnelle Erwärmung des Schmiermittels realisiert werden, sodass Verluste, insbesondere Reibleistungsverluste, der Antriebskomponente gering gehalten werden können.

Weist das Schmiermittel jedoch eine hohe Temperatur auf, welche eine effektive Kühlung des Schmiermittels erfordern kann, so kann beispielsweise der erste Wärmeübergangskoeffizient eingestellt werden, sodass ein besonders guter Wärmeübergang von dem sich in dem Sammelbereich befindenden Schmiermittel über die erste Wandung und die im Zwischenraum angeordnete Flüssigkeit an die zweite Wandung und insbesondere an die der ersten Wandung abgewandte Umgebung der zweiten Wandung erfolgen kann. Hierdurch können übermäßig hohe Temperaturen des Schmiermittels vermieden werden, da durch das Einstellen des ersten Wärmeübergangskoeffizienten ein besonders guter Wärmeabtransport, das heißt ein Abtransport einer besonders hohen Wärmemenge von dem Schmiermittel sichergestellt werden kann.

Um nun den Wärmeübergang beziehungsweise den Wärmeübergangskoeffizienten zwischen den Wandungen besonders bedarfsgerecht sowie auf besonders einfache und somit kosten-, bauraum- und gewichtsgünstige Weise realisieren zu können, ist erfindungsgemäß wenigstens ein fluidisch mit dem Zwischenraum verbundenes Reservoir zum Aufnehmen der Flüssigkeit vorgesehen. Ferner ist erfindungsgemäß wenigstens ein Verdrängungselement vorgesehen, welches zumindest teilweise in das Reservoir bewegbar ist, um dadurch eine Verdrängung zumindest eines Teils der Flüssigkeit aus dem Reservoir in den Zwischenraum zu bewirken. Beispielsweise ist das Verdrängungselement zwischen einer Ausgangsstellung und wenigstens einer Verdrängungsstellung, insbesondere relativ zu den Wandungen, bewegbar. Beispielsweise ist in der Verdrängungsstellung gegenüber der Ausgangsstellung das Verdrängungselement weiter in dem Reservoir angeordnet, sodass beispielsweise durch Bewegen des Verdrängungselements aus der Ausgangsstellung in die Verdrängungsstellung zumindest ein Teil der in dem Reservoir aufgenommenen Flüssigkeit mittels des Verdrängungselements aus dem Reservoir in den Zwischenraum verdrängt wird. Unter dieser Verdrängung der Flüssigkeit ist zu verstehen, dass zumindest ein Teil der Flüssigkeit - da diese mittels des Verdrängungselements verdrängt wird - aus dem Reservoir aus- und in den Zwischenraum einströmt.

Wird dann beispielsweise das Verdrängungselement wieder zurück aus der Verdrängungsstellung in die Ausgangsstellung bewegt, so kann die zuvor verdrängte Flüssigkeit beispielsweise wieder in dem Reservoir aufgenommen und somit aus dem Zwischenraum abgeführt werden. Bei der erfindungsgemäßen Antriebskomponente ist somit eine besonders bedarfsgerechte Einstellung des Wärmeübergangskoeffizienten zwischen den Wandungen auf besonders einfache und somit kostengünstige Weise realisierbar.

Der Erfindung liegt dabei insbesondere folgende Erkenntnis zugrunde: In Antriebskomponenten wie beispielsweise Getrieben, Achsgetrieben und Lagerstellen von Fahrzeugen kommen heute zur Verbesserung der tribologischen Eigenschaften Schmiermittel wie beispielsweise Öle zum Einsatz. Die Schmiermittel reduzieren die Reibung und ermöglichen einen Wärmeabtransport, insbesondere von leistungsübertragenden Elementen der Antriebskomponenten. Der Wärmeabtransport wird dabei durch das Herstellen eines Wärmeübergangs zwischen den leistungsübertragenden Elementen, dem Gehäuse und damit der das Gehäuse umgebenden Umgebungsluft ermöglicht. Die Eigenschaften des jeweiligen Schmiermittels und des Gehäuses insbesondere hinsichtlich ihrer jeweiligen Wärmeleitfähigkeit definieren dabei den Wärmeübergangskoeffizienten und damit, zusammen mit einer Kontaktfläche und einer Strömungsgeschwindigkeit, die abführbare Wärmemenge. Die Eigenschaften des jeweiligen Schmiermittels und des Gehäuses werden üblicherweise so gewählt, dass bei hoher Last entstehende Verlustleistungen abgeführt werden können und eine kritische, maximale Temperatur des jeweiligen Schmiermittels vermieden werden kann.

Herkömmliche Antriebskomponenten ermöglichen dabei üblicherweise keine Einstellung, insbesondere Steuerung oder Regelung, des Wärmeübergangskoeffizienten zwischen den leistungsübertragenden Elementen und dem Gehäuse beziehungsweise der Umgebung des Gehäuses. Durch den zuvor beschriebenen, konstanten und auf Maximallast ausgelegten Wärmeübergangskoeffizienten wird auch bei niedrigen Lasten und geringen Temperaturen des Schmiermittels ein großer Teil der entstehenden Wärmeenergie über das Gehäuse an dessen Umgebung abgeführt. Dies führt zu einer sehr langsamen Erwärmung des Schmiermittels, wodurch das Schmiermittel sehr lange Zeit in einem nicht idealen Temperaturbereich betrieben wird. Daraus resultieren unerwünscht hohe Verlustleistungen. Diese Probleme und Nachteile können bei der erfindungsgemäßen Antriebskomponente auf besonders einfache Weise vermieden werden, da - auf die beschriebene Weise - der Wärmeübergangskoeffizient zwischen den Wandungen und somit zwischen dem Schmiermittel und der Umgebung der zweiten Wandung beziehungsweise des Gehäuses insgesamt eingestellt werden kann. Dadurch kann der Zielkonflikt zwischen hoher Wärme- beziehungsweise Energieabfuhr bei hohen Lasten und geringer Wärme- beziehungsweise Energieabfuhr bei den demgegenüber niedrigen Lasten aufgelöst werden. Insbesondere ist es möglich, den Wärmeübergangskoeffizienten zwischen den Wandungen und somit zwischen den Bauelementen und dem Gehäuse beziehungsweise dessen Umgebung lastabhängig einzustellen, insbesondere zu steuern oder zu regeln.

Zum Einstellen des zweiten Wärmeübergangskoeffizienten wird beispielsweise die Flüssigkeit zumindest teilweise, insbesondere zumindest überwiegend oder vollständig, aus dem Zwischenraum abgeführt, sodass der Zwischenraum beispielsweise als Luftspalt ausgebildet ist beziehungsweise fungiert. Dieser Luftspalt kann bei geringen Temperaturen des Schmiermittels aufgrund der geringen Wärmeleitfähigkeit von beim Einstellen des zweiten Wärmeübergangskoeffizienten in dem Zwischenraum aufgenommener Luft im Vergleich zu der Flüssigkeit als Isolation des Schmiermittels gegenüber dem Gehäuse beziehungsweise dessen Umgebung dienen. Somit ist es vorzugsweise vorgesehen, dass die Flüssigkeit einen größeren Wärmeübergangskoeffizienten als Luft aufweist. Insbesondere kann vorgesehen sein, dass die Flüssigkeit ein Schmiermittel, insbesondere ein Öl, ist, wobei die Flüssigkeit beispielsweise das gleiche oder dasselbe Schmiermittel ist, welches sich in dem Sammelbereich sammeln kann. Infolge des Einstellens des zweiten Wärmeübergangskoeffizienten wird auftretende Verlustleistung für eine schnelle Aufwärmung des Schmiermittels verwendet.

Bei hohen Temperaturen des Schmiermittels wird der Zwischenraum teilweise oder komplett mit der beispielsweise als Öl ausgebildeten Flüssigkeit geflutet, wodurch der gegenüber dem zweiten Wärmeübergangskoeffizient größere, erste Wärmeübergangskoeffizient in dem Zwischenraum und somit zwischen den Wandungen eingestellt wird. Mit anderen Worten wird der auch als Wärmeleitkoeffizient bezeichnete Wärmeübergangskoeffizient durch Einbringen der Flüssigkeit in zumindest einen Teil des Zwischenraums erhöht. Daraus resultiert gegenüber dem zweiten Wärmeübergangskoeffizient eine erhöhte Abfuhr von Wärmeenergie von dem Schmiermittel, wodurch dessen Temperatur auf einem unkritischen Maximalwert gehalten werden kann.

Insgesamt ist erkennbar, dass durch das besonders bedarfsgerechte Einbringen und Abführen des Schmiermittels in den beziehungsweise aus dem Zwischenraum der Wärmeübergangskoeffizient zwischen den Wandungen bedarfsgerecht angepasst werden kann. Durch diese Anpassung des Wärmeübergangskoeffizienten verringert sich die Energieabfuhr an die Umgebung beziehungsweise Umwelt bei geringen Lasten im Vergleich zu herkömmlichen Antriebskomponenten. Auftretende Verlustenergien können dadurch effizient für eine schnelle Aufheizung des Schmiermittels verwendet werden. Hierdurch wird das Schmiermittel besonders schnell im Betriebsbereich in geringere Viskosität gebracht und dort betrieben. Dies führt zu höheren Wirkungsgraden der leistungsübertragenden Elemente, insbesondere im Vergleich zu Lösungen, bei denen lediglich Kontaktflächen, über welche das Schmiermittel in Kontakt mit jeweiligen Elementen kommen kann, angepasst werden.

In vorteilhafter Ausgestaltung der Erfindung ist wenigstens ein Betätigungselement vorgesehen, dessen Form und/oder Volumen infolge einer Temperaturveränderung des Betätigungselements veränderbar ist, wodurch die Bewegung des Verdrängungselements in das Reservoir bewirkbar ist. Unter der Veränderung der Form des Betätigungselements ist eine Veränderung wenigstens einer Erstreckung beziehungsweise wenigstens einer äußeren Abmessung des Betätigungselements zu verstehen, wobei das Betätigungselement nicht notwendigerweise auch seine geometrische Form an sich verändern muss. Bei der Veränderung des Volumens ändert das Betätigungselement sein Volumen infolge einer Temperaturveränderung des Betätigungselements.

Mit anderen Worten verändert das Betätigungselement seine Form, insbesondere seine wenigstens eine Erstreckung beziehungsweise Abmessung, und/oder sein Volumen infolge einer Temperaturveränderung des Betätigungselements, wodurch das Betätigungselement die Bewegung des Verdrängungselements in das Reservoir bewirkt. Das Verdrängungselement wird somit mittels des Betätigungselements zumindest teilweise in das Reservoir bewegt, wodurch zumindest ein Teil der im Reservoir aufgenommenen Flüssigkeit aus dem Reservoir in den Zwischenraum verdrängt wird. Durch die Verwendung des Betätigungselements ist die Grundlage zur Realisierung einer von Energiequellen beziehungsweise Energiesystemen des übrigen Fahrzeugs autarken Bewegung des Verdrängungselements geschaffen, sodass der Wärmeübergangskoeffizient auf besonders einfache Weise bedarfsgerecht eingestellt werden kann. Insbesondere ist durch diese Ausführungsform die Voraussetzung geschaffen, dass sich das Betätigungselement autark beziehungsweise selbständig oder selbsttätig verformt und/oder in seinem Volumen, ohne dass hierfür auf Energiequellen des übrigen Fahrzeugs zurückgegriffen werden muss. Dadurch ist es beispielsweise möglich, auf eine elektrische Verbindung der Antriebskomponente mit einer Energiequelle des übrigen Fahrzeugs zu verzichten, sodass der Aufbau der Antriebskomponente besonders einfach gehalten werden kann. In der Folge können die Kosten und das Gewicht der Antriebskomponente besonders gering gehalten werden.

Dabei hat es sich als besonders vorteilhaft gezeigt, wenn das Betätigungselement als Expansionselement ausgebildet ist, welches sich infolge einer Erwärmung des Expansionselements ausdehnt und dadurch die Bewegung des Verdrängungselements in das Reservoir bewirkt. Die Erwärmung stellt somit die zuvor beschriebene Temperaturveränderung des Betätigungselements dar. Bei einer solchen Erwärmung des Betätigungselements dehnt sich das Betätigungselement aus und verändert somit seine Form und/oder sein Volumen insbesondere dahingehend, dass wenigstens eine Erstreckung beziehungsweise eine äußere Abmessung des Betätigungselements größer wird. Hierdurch übt beispielsweise das Betätigungselement zumindest mittelbar auf das Verdrängungselement eine Kraft auf, mittels welcher das Verdrängungselement - wie zuvor beschrieben - zumindest teilweise in das Reservoir hineinbewegt wird. Diese Ausführungsform ermöglicht die Realisierung einer besonders bedarfsgerechten und gleichzeitig besonders einfachen Einstellung des Wärmeübergangskoeffizienten, da die Verwendung des Betätigungselements und somit die Bewegung des Verdrängungselements autark von den Energiequellen des übrigen Fahrzeugs erfolgen kann.

Die Erwärmung des Betätigungselements und die daraus resultierende Ausdehnung des Betätigungselements resultiert beispielsweise aus einem Wärmeübergang von dem Schmiermittel an das Betätigungselement (Expansionselement). Erwärmt sich somit beispielsweise das Schmiermittel mit fortschreitendem Betrieb der Antriebskomponente, so erfolgt beispielsweise infolge des zuvor beschriebenen Wärmeübergangs von dem Schmiermittel an das Betätigungselement eine Erwärmung des Betätigungselements, ohne dass hierzu auf die Energiequellen des übrigen Fahrzeug zurückgegriffen werden müsste. Durch die Erwärmung des Betätigungselements wird zumindest ein Teil der Flüssigkeit in den Zwischenraum eingebracht, insbesondere verdrängt, sodass dann der erste Wärmeübergangskoeffizient eingestellt wird. In der Folge kann - wie zuvor beschrieben - das Schmiermittel gekühlt werden, was aufgrund der zunehmenden Erwärmung des Schmiermittels mit fortschreitendem Betrieb der Antriebskomponente auch gewünscht ist.

Wird dann beispielsweise die Antriebskomponente abgestellt, sodass sich das Schmiermittel sowie gegebenenfalls das Betätigungselement abkühlen können, so kann sich das Betätigungselement beispielsweise zusammenziehen, sodass die zuvor erwähnte, wenigstens eine Erstreckung beziehungsweise Abmessung des Betätigungselements wieder geringer wird. In der Folge wir das Verdrängungselement zumindest teilweise aus dem Reservoir herausbewegt beziehungsweise kann aus dem Reservoir herausbewegt werden, sodass die zuvor verdrängte und zunächst in dem Zwischenraum aufgenommene Flüssigkeit wieder Platz im Reservoir findet und wieder in dem Reservoir aufgenommen werden kann. Mit anderen Worten kann dann die Flüssigkeit wieder aus dem Zwischenraum in das Reservoir eingebracht werden, insbesondere strömen, wodurch dann der zweite Wärmeübergangskoeffizient eingestellt ist. Bei einer erneuten Inbetriebnahme der Antriebskomponente ist dann der zweite Wärmeübergangskoeffizient eingestellt, sodass das Schmiermittel isoliert ist und sich schnell erwärmt, was beispielsweise im Rahmen eines Kaltstarts beziehungsweise einer Warmlaufphase auch erwünscht ist, da das Schmiermittel bei einer Inbetriebnahme der Antriebskomponente zunächst eine unerwünscht geringe Temperatur aufweist.

Insgesamt ist erkennbar, dass bei dieser Ausführungsform eine von Energiequellen des übrigen Fahrzeugs autarke, das heißt unabhängige und insbesondere selbständige beziehungsweise selbsttätige Einstellung des Wärmeübergangskoeffizienten möglich ist, sodass die Antriebskomponente nicht mit Energiequellen des übrigen Fahrzeugs verbunden werden muss. Dadurch kann das Kraftfahrzeug auf besonders einfache, zeit- und kostengünstige Weise gefertigt werden.

Um den Wärmeübergangskoeffizient bedarfsgerecht auf besonders einfache Weise einstellen zu können, hat es sich als ferner vorteilhaft gezeigt, wenn das Betätigungselement einen höheren Wärmeausdehnungskoeffizienten als das Schmiermittel und/oder als die Flüssigkeit aufweist.

Ferner hat es sich als besonders vorteilhaft gezeigt, wenn das Betätigungselement aus Wachs gebildet ist. Hierbei ist das Betätigungselement beispielsweise bei höchstens 30 Grad, insbesondere bei höchstens 20 Grad, fest und schmilzt beispielsweise bei höchstens 40 Grad, wodurch es zu einer Formveränderung in Form einer Volumenzunahme des Betätigungselements kommt. In der Folge wird das Verdrängungselement bewegt. Es wurde gefunden, dass sich Wachs besonders vorteilhaft als das Betätigungselement eignet, um dadurch eine autarke beziehungsweise selbständige Einstellung des Wärmeübergangskoeffizienten realisieren zu können.

Als besonders vorteilhaft hat es sich gezeigt, wenn das Reservoir zumindest teilweise, insbesondere zumindest überwiegend oder vollständig, in Fahrzeughochrichtung unterhalb des Zwischenraums angeordnet ist. Darunter ist beispielsweise zu verstehen, dass sich das Reservoir in Einbaulage der Antriebskomponente und bezogen auf die Fahrzeughochrichtung zumindest teilweise unter dem Zwischenraum befindet, wobei die Antriebskomponente ihre Einbaulage in vollständig hergestelltem Zustand des Kraftfahrzeugs einnimmt. Durch diese Anordnung des Reservoirs ist es möglich, dass zum Einstellen des zweiten Wärmeübergangskoeffizienten die zunächst in dem Zwischenraum aufgenommene Flüssigkeit schwerkraftbedingt, insbesondere ausschließlich unter Einwirkung der Schwerkraft, aus dem Zwischenraum zurück in das Reservoir fließt beziehungsweise strömt, sodass die Flüssigkeit autark von den Energiequellen des übrigen Fahrzeugs nicht nur aus dem Reservoir in den Zwischenraum verdrängt, sondern auch aus dem Zwischenraum abgeführt und zurück in das Reservoir eingebracht werden kann. Hierdurch kann der Wärmeübergangskoeffizient besonders einfach und kostengünstig eingestellt werden.

Eine weitere Ausführungsform zeichnet sich dadurch aus, dass dem zumindest teilweise in einer erste Richtung in das Reservoir bewegbaren Verdrängungselement wenigstens ein durch die Bewegung des Verdrängungselements spannbares Federelement zum Bereitstellen einer Federkraft zugeordnet ist, mittels welcher das Betätigungselement in eine der ersten Richtung entgegengesetzte zweite Richtung bewegbar ist. Mit anderen Worten, wird das Verdrängungselement in die erste Richtung und dabei beispielsweise aus der Ausgangs- in die Verdrängungsstellung bewegt, so wird das Federelement gespannt, sodass das Federelement beispielsweise in der Verdrängungsstellung stärker als in der Ausgangsstellung gespannt ist. Somit stellt das Federelement zumindest in der Verdrängungsstellung die zuvor genannte Federkraft bereit, welche zumindest mittelbar auf das Verdrängungselement wirkt. Kühlt sich dann beispielsweise das Betätigungselement ab, sodass das Betätigungselement zusammenzieht, so kann sich das Federelement zumindest teilweise entspannen, sodass das Verdrängungselement mittels der Federkraft aus der Verdrängungsstellung zurück in die Ausgangsstellung bewegt wird. Hierdurch kann ein zumindest im Wesentlichen autarker Betrieb, das heißt eine zumindest im Wesentlichen autarke Einstellung des Wärmeübergangskoeffizienten dargestellt werden.

In weiterer Ausgestaltung der Erfindung ist wenigstens ein von Energiequellen des übrigen Fahrzeugs autarkes Stellglied vorgesehen, mittels welchem das Verdrängungselement bewegbar ist. Bei diesem Stellglied handelt es sich beispielsweise um das zuvor genannte Betätigungselement. Durch diese autarke Ausgestaltung der Abhängigkeit hinsichtlich der Einstellung des Wärmeübergangskoeffizienten muss die Antriebskomponente beziehungsweise das Verdrängungselement nicht aufwändig mit Energiequellen des übrigen Fahrzeugs verbunden werden, sodass die Kosten gering gehalten werden können.

Schließlich hat es sich als vorteilhaft gezeigt, wenn die Antriebskomponente als Getriebe, insbesondere als Achsgetriebe, ausgebildet ist. Üblicherweise ist es vorgesehen, dass insbesondere Achsgetriebe nicht mit Energiequellen des übrigen Fahrzeugs verbunden sind. Dies kann aufgrund der zuvor beschriebenen autarken Einstellung des Wärmeübergangskoeffizienten auch bei der erfindungsgemäßen Antriebskomponente vermieden werden, sodass die Kosten besonders gering gehalten werden können bei gleichzeitiger Realisierung einer bedarfsgerechten Einstellung des Wärmeübergangskoeffizienten.

Ein zweiter Aspekt der Erfindung betrifft ein Kraftfahrzeug, mit wenigstens einer erfindungsgemäßen Antriebskomponente. Vorteile und vorteilhafte Ausgestaltungen der erfindungsgemäßen Antriebskomponente sind als Vorteile und vorteilhafte Ausgestaltungen des erfindungsgemäßen Fahrzeugs anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ausschnittsweise eine schematische Schnittansicht einer erfindungsgemäßen Antriebskomponente, deren Schmiermittel eine erste Temperatur aufweist; und
- Fig. 2: ausschnittsweise eine weitere schematische Schnittansicht der Antriebskomponente, deren Schmiermittel eine gegenüber der ersten Temperatur höhere, zweite Temperatur aufweist.

In den Fig. sind gleiche oder funktionsgleiche Elemente mit gleichen Bezugszeichen versehen.

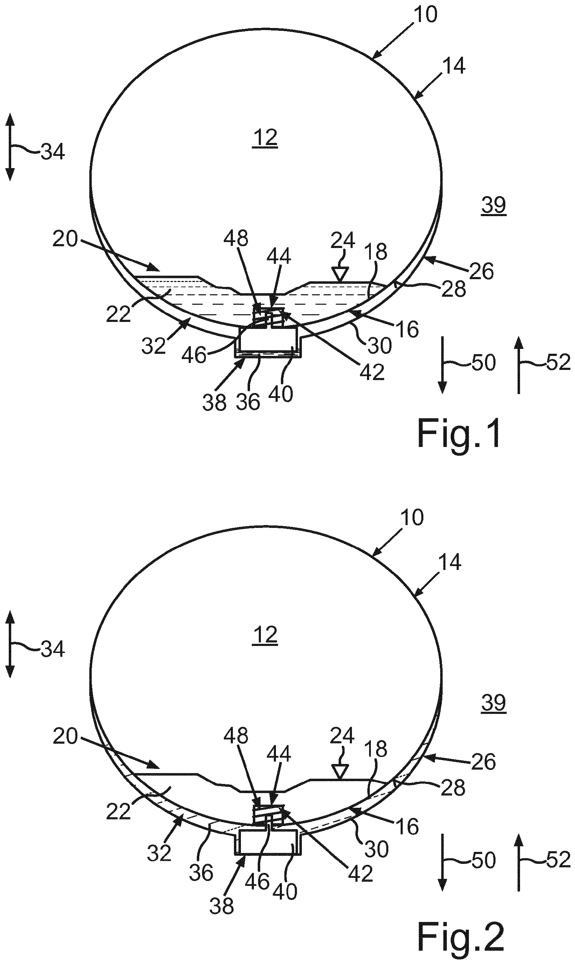

Fig. 1 zeigt ausschnittsweise in einer schematischen Schnittansicht eine im Ganzen mit 10 bezeichnete Antriebskomponente für ein Kraftfahrzeug. Die Antriebskomponente ist beispielsweise ein Getriebe, welches insbesondere als Achsgetriebe ausgebildet sein kann. Ein solches Achsgetriebe ist ein Differentialgetriebe, welches bei einer Kurvenfahrt einen Drehzahlausgleich zwischen kurveninnerem und kurvenäußerem Rad einer Achse des Kraftfahrzeugs zulässt. Die Antriebskomponente 10 weist wenigstens einen Aufnahmeraum 12 auf, welcher beispielsweise durch ein Gehäuse 14 der Antriebskomponente 10 gebildet beziehungsweise begrenzt ist. Im fertig hergestellten Zustand der Antriebskomponente 10 sind in Fig. 1 nicht dargestellte Bauelemente der Antriebskomponente 10 in dem Aufnahmeraum 12 angeordnet. Bei diesen Bauelementen handelt es sich beispielsweise um leistungsübertragende Elemente, welche relativ zueinander und/oder relativ zu dem Gehäuse 14 bewegbar, insbesondere drehbar und/oder translatorisch bewegbar, sind. Beispielsweise handelt es sich bei den Bauelementen um Zahnräder, welche in Eingriff miteinander stehen können.

Die Antriebskomponente 10 weist ferner wenigstens eine erste Wandung 16 auf, welche beispielsweise durch das Gehäuse 14, insbesondere durch ein Gehäuseelement 18 des Gehäuses 14, gebildet sein kann. Durch die erste Wandung 16 ist der Aufnahmeraum 12 zumindest teilweise begrenzt. Ferner ist durch die erste Wandung 16 ein Sammelbereich 20 zum Sammeln eines Schmiermittels 22 begrenzt, dessen Pegel in Fig. 1 mit 24 bezeichnet ist.

Das Schmiermittel 22 ist ein Öl, welches auch als Schmieröl bezeichnet und zum Schmieren und/oder Kühlen der Bauelemente genutzt wird. Dabei ist der Sammelbereich 20 in dem Aufnahmeraum 12 angeordnet.

Während eines Betriebs der Antriebskomponente 10 werden die Bauelemente mit dem Schmiermittel 22, welches vorliegend als Getriebeöl ausgebildet ist, versorgt, wodurch die Bauelemente geschmiert beziehungsweise gekühlt werden. Nach dem Versorgen der Bauelemente mit dem Schmiermittel 22 kann das Schmiermittel von den Bauelementen abströmen und sich beispielsweise in dem Sammelbereich 20 sammeln.

Die Antriebskomponente 10 umfasst ferner wenigstens eine zweite Wandung 26, welche auf einer dem Sammelbereich 20 abgewandten Seite 28 der ersten Wandung 16 angeordnet ist. Die zweite Wandung 26 ist beispielsweise durch das Gehäuse 14, insbesondere durch ein Gehäuseelement 30 des Gehäuses 14, gebildet. Da die Wandung 16 beziehungsweise das Gehäuseelement 30 auf der dem Aufnahmeraum 12 und somit dem Sammelbereich 20 abgewandten Seite 28 der ersten Wandung 16 angeordnet sind, wird das Gehäuseelement 30 auch als äußeres Gehäuseelement oder als äußeres Gehäuse bezeichnet, wobei das Gehäuseelement 18 auch als inneres Gehäuse oder als inneres Gehäuseelement bezeichnet wird.

Die erste Wandung 16 ist beispielsweise durch eine dünnwandige Schale, in welcher das Schmiermittel 22 aufgefangen werden kann, gebildet, wobei diese Schale beispielsweise thermisch gegenüber dem Gehäuse 14, insbesondere gegenüber dem Gehäuseelement 30, isoliert ist. Alternativ ist es denkbar, dass die Wandungen 16 und 26 durch eine doppelwandige Ausführung des Gehäuses 14 gebildet sind. Aus Fig. 1 ist erkennbar, dass die zweite Wandung 26 zumindest in einem Teilbereich von der ersten Wandung 16 beabstandet ist, sodass zwischen den Wandungen 16 und 26 ein zumindest teilweise durch die Wandungen 16 und 26 begrenzter Zwischenraum 32 gebildet ist.

Die Antriebskomponente 10 nimmt ihre Einbaulage in vollständig hergestelltem Zustand des Kraftfahrzeugs ein, wobei die Antriebskomponente 10 in ihrer Einbaulage an dem Kraftfahrzeug montiert ist. Dabei ist in Fig. 1 durch einen Doppelpfeil 34 die Fahrzeughochrichtung veranschaulicht. Somit ist erkennbar, dass der Zwischenraum 32 in Fahrzeughochrichtung zumindest teilweise unterhalb des Sammelbereichs 20 und somit unterhalb des Schmiermittels 22 angeordnet ist, insbesondere bezogen auf die Einbaulage der Antriebskomponente 10.

Der Zwischenraum 32 wird einerseits durch die erste Wandung 16 und andererseits durch die zweite Wandung 26 begrenzt. Vorliegend wird der Zwischenraum 32 bezogen auf die Einbaulage in Fahrzeughochrichtung nach oben hin durch die erste Wandung 16 und nach unten hin durch die Wandung 26 begrenzt. Wie im Folgenden noch genauer erläutert wird, ist zum Einstellen eines Wärmeübergangskoeffizienten zwischen den Wandungen 16 und 26 eine vorliegend als Öl ausgebildete Flüssigkeit 36 in den Zwischenraum 32 einbringbar und aus dem Zwischenraum 32 abführbar.

Durch Einbringen der Flüssigkeit 36 in den Zwischenraum 32 wird der Zwischenraum 32 mit der Flüssigkeit 36 gespült, wodurch ein erster Wärmeübergangskoeffizient in dem Zwischenraum 32 und somit zwischen den Wandungen 16 und 26 eingestellt wird. Da - wie aus Fig. 1 erkennbar ist - der Zwischenraum 32 zwischen dem sich in dem Sammelbereich 20 befindenden Schmiermittel 22 und der Umgebung 39 des Gehäuses 14 angeordnet ist, wird durch das Einbringen der Flüssigkeit 36 in den Zwischenraum 32 und durch das Abführen der Flüssigkeit 36 aus dem Zwischenraum 32 der Wärmeübergangskoeffizient zumindest in einem Teilbereich zwischen dem Schmiermittel 22 und der Umgebung 39 eingestellt.

Durch Abführen der Flüssigkeit 36 aus dem Zwischenraum 32 wird ein gegenüber dem ersten Wärmeübergangskoeffizienten geringerer, zweiter Wärmeübergangskoeffizient eingestellt, da der Zwischenraum 32 bei Einstellen des zweiten Wärmeübergangskoeffizienten beispielsweise als Luftspalt ausgebildet ist. Dies ist beispielsweise der Fall, da durch das Abführen der Flüssigkeit 36 aus dem Zwischenraum 32 Luft in den Zwischenraum 32 eingebracht ist. Die Flüssigkeit 36 weist dabei einen höheren Wärmeübergangskoeffizienten als Luft auf.

Vorzugsweise ist es vorgesehen, dass die Flüssigkeit 36 in Abhängigkeit von der Temperatur des Schmiermittels 22 und/oder in Abhängigkeit von einer anderen Größe in den Zwischenraum 32 eingebracht sowie aus dem Zwischenraum 32 abgeführt wird. Durch Einstellen einer in dem Zwischenraum 32 aufgenommenen Menge der Flüssigkeit 36 ist es ferner möglich, eine Kontaktfläche, über welche die Flüssigkeit 36 mit der ersten Wandung 16 insbesondere in wärmeleitendem Kontakt steht, einzustellen, sodass der Wärmeübergangskoeffizient zwischen den Wandungen 16 und 26 über die Kontaktfläche als auch über den Wärmeübergangskoeffizienten über die Wärmeleitfähigkeit der Flüssigkeit 36 in dem Zwischenraum 32 variiert werden kann.

Wie im Folgenden noch genauer erläutert wird, wird vorzugsweise das Einbringen der Flüssigkeit 36 in den Zwischenraum 32 sowie das Abführen der Flüssigkeit 36 aus dem Zwischenraum 32 durch wenigstens ein von Energiequellen beziehungsweise Energienetzen des übrigen Kraftfahrzeugs, insbesondere von fahrzeuginternen Energienetzen des Kraftfahrzeugs, autarkes Stellglied sowie durch Ausnutzung der Gravitation, das heißt der Schwerkraft bewirkt, wobei das Stellglied auch als Steller bezeichnet wird. Unter den fahrzeuginternen Energienetzen sind beispielsweise mechanische, elektrische und hydraulische Energiequellen zu verstehen.

Um dabei den Wärmeübergangskoeffizienten zwischen den Wandungen 16 und 26 auf besonders einfache Weise bedarfsgerecht einstellen zu können, umfasst die Antriebskomponente 10 wenigstens ein fluidisch mit dem Zwischenraum 32 verbundenes Reservoir 38, in welchem die Flüssigkeit 36 aufgenommen beziehungsweise aufnehmbar ist. Ferner ist wenigstens ein als Stempel 40 ausgebildetes Verdrängungselement vorgesehen, welches zumindest teilweise in das Reservoir 38 bewegbar ist, um dadurch eine Verdrängung zumindest eines Teils der in dem Reservoir 38 aufgenommenen Flüssigkeit 36 aus dem Reservoir 38 in den Zwischenraum 32 zu bewirken.

Ferner ist wenigstens ein Betätigungselement 42 vorgesehen, welches in einer Kammer 44 aufgenommen ist. Das Betätigungselement 42 ist dabei das zuvor genannte, von den Energiequellen des übrigen Kraftfahrzeugs autarke Stellglied, mittels welchem der Stempel 40 bewegbar ist. Dabei ragt ein Kolben 46 des Stempels 40 in die Kammer 44 hinein. Das Betätigungselement 42 ist als Expansionselement ausgebildet, welches sich infolge einer Erwärmung des Expansionselements ausdehnt und somit seine Form und/oder sein Volumen verändert. Durch dieses Ausdehnen des Expansionselements wird die Bewegung des Stempels 40 in das Reservoir 38 bewirkt. Der Stempel 40 ist somit ein aktuierter Stempel, welcher mittels des Betätigungselements 42 aktuiert, das heißt betätigt und somit bewegt wird. Das Betätigungselement 42 ist beispielsweise ein Medium, welches infolge einer Erwärmung und einer daran anschließenden Abkühlung des Betätigungselements 42 Aggregatszustandsänderungen durchführen kann. Insbesondere ist es vorgesehen, dass sich das Expansionselement bei einer Erwärmung des Expansionselements ausdehnt und bei einer darauffolgenden Abkühlung wieder zusammenzieht. Durch das Ausdehnen des Betätigungselements 42 wird der Stempel 40 bewegt, wobei sich das Betätigungselement 42 in Abhängigkeit von seiner Temperatur ausdehnt. Dabei ist es insbesondere vorgesehen, dass das Betätigungselement 42 einen höheren Wärmeausdehnungskoeffizienten als das Schmiermittel 22 und/oder als die Flüssigkeit 36 aufweist.

Ferner ist wenigstens ein Federelement 48 vorgesehen, welches dazu ausgebildet ist, eine Federkraft bereitzustellen, mittels welcher das Verdrängungselement (Stempel 40) bewegbar ist. Außerdem ist das Reservoir 38 bezogen auf die Einbaulage und in Fahrzeughochrichtung unterhalb des Zwischenraums 32 angeordnet.

Fig. 1 zeigt die Antriebskomponente 10 und somit das Schmiermittel 22 und das Betätigungselement 42 in einem kalten Zustand, das heißt bei einer ersten Temperatur. Dabei füllt das Betätigungselement 42 beispielsweise die Kammer 44, welche einen definierten Raum bereitstellt, vollständig. In diesem Raum (Kammer 44) ist auch der Kolben 46 des Stempels 40 angeordnet. Bei der ersten Temperatur ist beispielsweise das als Rückstellfeder ausgebildete Federelement 48 entspannt. Bei der ersten Temperatur gibt der Stempel 40 beispielsweise das Reservoir 38, insbesondere das vollständige Reservoir 38, für die Flüssigkeit 36 frei, sodass - wird das Reservoir 38 in Fahrzeughochrichtung unterhalb des Zwischenraums 32 angeordnet - die Flüssigkeit 36 aus dem Zwischenraum 32 schwerkraftbedingt, das heißt vorzugsweise ausschließlich unter Einwirkung der Schwerkraft, aus dem Zwischenraum 32 in das Reservoir 38 strömen kann. Dadurch wird beziehungsweise ist der Zwischenraum 32 zwischen den Wandungen 16 und 26 evakuiert und somit als Luftspalt ausgebildet. Somit ist der Wärmeübergangskoeffizient zwischen dem Schmiermittel 22 in dem inneren Gehäuseelement 18 und dem äußeren Gehäuseelement 30 sehr gering.

Mit fortschreitendem Betrieb der Antriebskomponente 10 erwärmt sich diese, sodass sich auch beispielsweise das Schmiermittel 22 erwärmt. In der Folge kann beispielsweise ein Wärmeübergang von dem Schmiermittel 22 an das Betätigungselement 42 erfolgen, insbesondere über wenigstens eine die Kammer 44 zumindest teilweise begrenzende Wandung. Durch diesen Wärmeübergang wird das Betätigungselement 42 erwärmt, wodurch sich das Betätigungselement 42 ausdehnt.

Fig. 2 zeigt die Antriebskomponente 10 in diesem erwärmten Zustand, in welchem die Antriebskomponente 10 eine gegenüber der ersten Temperatur höhere, zweite Temperatur aufweist. Infolge der Erwärmung des Betätigungselements 42 dehnt sich das Betätigungselement 42 aus. Durch diese Ausdehnung wird der sich in der Kammer 44 befindende und in Kontakt mit dem Betätigungselement 42 stehende Kolben 46 zumindest teilweise aus der Kammer 44 bewegt, insbesondere gedrückt, wodurch der Stempel 40 insgesamt in eine in Fig. 1 durch einen Pfeil 50 veranschaulichte erste Richtung bewegt wird. Dadurch bewegt sich der Stempel 40 zumindest teilweise in das Reservoir 38. Hierdurch verdrängt der Stempel 40 zumindest einen Teil der in dem Reservoir 38 aufgenommenen Flüssigkeit 36, sodass zumindest dieser Teil der Flüssigkeit 36 in den Zwischenraum 32 verdrängt wird. Somit befüllt die mittels des Stempels 40 verdrängte Flüssigkeit zumindest einen Teil des Zwischenraums 32. Dadurch wird der Wärmeübergangskoeffizient zwischen dem Schmiermittel 22 im inneren Gehäuseelement 18 und dem äußeren Gehäuseelement 30 gegenüber der ersten Temperatur erhöht und es entsteht eine Wärmebrücke zum äußeren Gehäuseelement 30, insbesondere zu dessen Oberfläche und somit zu der Umgebung 39. Kühlen sich das Schmiermittel 22 und das Betätigungselement 42 wieder ab, so zieht sich das beispielsweise als Wachs ausgebildete Betätigungselement 42 wieder zusammen.

Durch das Bewegen des Stempels 40 in die erste Richtung wird das Federelement 48 gespannt. Dadurch stellt das Federelement 48 eine Federkraft bereit. Zieht sich nun das Betätigungselement 42 wieder zusammen, so kann der Stempel 40 mittels der Federkraft in eine der ersten Richtung entgegensetzte und in Fig. 1 durch einen Pfeil 52 veranschaulichte Richtung bewegt werden, sodass der Kolben 46 wieder zumindest teilweise in die Kammer 44 hineinbewegt wird. Mit anderen Worten wird der Stempel 40 durch die Federkraft wieder in eine Ausgangslage geführt, wodurch der Stempel 40 das Reservoir 38 für die sich zunächst im Zwischenraum 32 befindende Flüssigkeit wieder freigibt. Die zuvor in den Zwischenraum 32 verdrängte Flüssigkeit kann somit schwerkraftbedingt aus dem Zwischenraum 32 zurück in das Reservoir 38 strömen, sodass der Zwischenraum 32 evakuiert wird.

Als Energiequelle zum Befüllen des Zwischenraums 32 mit der Flüssigkeit 36 kommt somit Verlustenergie der Antriebskomponente 10 zum Einsatz, da diese Verlustenergie in Form von Wärme das Betätigungselement 42 erwärmt. Da ferner das Bewegen des Stempels 40 zurück in die zweite Richtung mittels des Federelements 48 bewirkt wird, sind das Befüllen des Zwischenraums 32 mit der Flüssigkeit 36, das Abführen der Flüssigkeit 36 aus dem Zwischenraum 32 und somit die Einstellung des Wärmeübergangskoeffizienten zwischen den Wandungen 16 und 26 völlig autark von jeglichen Energiesystemen, Energiequellen beziehungsweise Energiespeichern des übrigen Fahrzeugs und können somit problemlos bei Geräten beziehungsweise Aggregaten eingesetzt werden, welche üblicherweise keine mechanische, elektrische und/oder hydraulische Verbindung zu einer fahrzeuginternen Energiequelle des übrigen Kraftfahrzeugs haben.

## Patentansprüche

1. Antriebskomponente (10) für ein Kraftfahrzeug, mit wenigstens einem Aufnahmeraum (12) für Bauelemente der Antriebskomponente (10), mit wenigstens einer den Aufnahmeraum (12) zumindest teilweise begrenzenden ersten Wandung (16), durch welche wenigstens ein Sammelbereich (20) zum Sammeln eines Schmiermittels (22) zum Schmieren der Bauelemente zumindest teilweise begrenzt ist, und mit wenigstens einer auf einer dem Sammelbereich (22) abgewandten Seite (28) der ersten Wandung (16) angeordneten zweiten Wandung (26), welche zumindest in einem Teilbereich von der ersten Wandung (16) beabstandet ist, sodass zwischen den Wandungen (16, 26) ein zumindest teilweise durch die Wandungen (16, 26) begrenzter Zwischenraum (32) gebildet ist, wobei zum Einstellen eines Wärmeübergangskoeffizienten zwischen den Wandungen (16, 26) eine Flüssigkeit (36) in den Zwischenraum (32) einbringbar und aus dem Zwischenraum (32) abführbar ist, **gekennzeichnet durch**:
- wenigstens ein fluidisch mit dem Zwischenraum (32) verbundenes Reservoir (38) zum Aufnehmen der Flüssigkeit (36); und
- wenigstens ein Verdrängungselement (40), welches zumindest teilweise in das Reservoir (38) bewegbar ist, um dadurch eine Verdrängung zumindest eines Teils der Flüssigkeit (36) aus dem Reservoir (38) in den Zwischenraum (32) zu bewirken.

2. Antriebskomponente (10) nach Anspruch 1,
**dadurch gekennzeichnet, dass**
wenigstens ein Betätigungselement (42) vorgesehen ist, dessen Form und/oder Volumen infolge einer Temperaturveränderung des Betätigungselements (42) veränderbar ist, wodurch die Bewegung des Verdrängungselements (40) in das Reservoir (38) bewirkbar ist.

3. Antriebskomponente (10) nach Anspruch 2,
**dadurch gekennzeichnet, dass**
das Betätigungselement (42) als Expansionselement ausgebildet ist, welches sich infolge einer Erwärmung des Expansionselements ausdehnt und dadurch die Bewegung des Verdrängungselements (40) in das Reservoir (38) bewirkt

4. Antriebskomponente (10) nach Anspruch 2 oder 3,
**dadurch gekennzeichnet, dass**
das Betätigungselement (42) einen höheren Wärmeausdehnungskoeffizienten als das Schmiermittel (22) und/oder als die Flüssigkeit (36) aufweist.

5. Antriebskomponente (10) nach einem der Ansprüche 2 bis 4,
**dadurch gekennzeichnet, dass**
das Betätigungselement (42) aus Wachs gebildet ist.

6. Antriebskomponente (10) nach einem der vorhergehenden Ansprüche,
**dadurch gekennzeichnet, dass**
das Reservoir (38) zumindest teilweise in Fahrzeughochrichtung unterhalb des Zwischenraums (32) angeordnet ist.

7. Antriebskomponente (10) nach einem der vorhergehenden Ansprüche,
**dadurch gekennzeichnet, dass**
dem zumindest teilweise in eine erste Richtung in das Reservoir (38) bewegbaren Verdrängungselement (40) wenigstens ein durch die Bewegung des Verdrängungselements (40) spannbares Federelement (48) zum Bereitstellen eines Federkraft zugeordnet ist, mittels welcher das Betätigungselement (40) in eine der ersten Richtung entgegengesetzte zweite Richtung bewegbar ist.

8. Antriebskomponente (10) nach einem der vorhergehenden Ansprüche,
**dadurch gekennzeichnet, dass**
wenigstens ein von Energiequellen des übrigen Fahrzeugs autarkes Stellglied (42) vorgesehen ist, mittels welchem das Verdrängungselement (40) bewegbar ist.

9. Antriebskomponente (10) nach einem der vorhergehenden Ansprüche,
**dadurch gekennzeichnet, dass**
die Antriebskomponente (10) als Getriebe, insbesondere als Achsgetriebe, ausgebildet ist.

10. Kraftfahrzeug, mit wenigstens einer Antriebskomponente (10) nach einem der vorhergehenden Ansprüche.

## Claims

1. Drive component (10) for a motor vehicle, having at least one mounting frame (12) for structural elements of the drive component (10), having at least one first wall (16) at least partially limiting the mounting frame (12), by means of which first wall at least one collection area (20) for collecting a lubricant (22) for lubricating the structural elements is at least partially limited, and having at least one second wall (26) disposed on a side (28) of the first wall (16) facing away from the collection area (22), which second wall is at least in a partial area distanced from the first wall (16), such that between the walls (16, 26) is formed an intermediate chamber (32) limited at least partially by the walls (16, 26), wherein for adjusting a heat transfer coefficient between the walls (16, 26) a fluid (36) can be introduced into the intermediate chamber (32) and can be discharged out of the intermediate chamber (32),
**characterised by**:
- at least one reservoir (38), connected fluidically with the intermediate chamber (32), for the reception of the fluid (36); and
- at least one displacing element (40), which is at least partially moveable into the reservoir (38), in order thereby to effect a displacement of at least a part of the fluid (36) out of the reservoir (38) into the intermediate chamber (32).

2. Drive component (10) according to claim 1,
**characterised in that**
at least one operating element (42) is provided, the shape and/or volume of which is alterable as a result of a temperature change of the operating element (42), as a result of which the movement of the displacing element (40) into the reservoir (38) can be effected.

3. Drive component (10) according to claim 2,
**characterised in that**
the operating element (42) is designed as an expansion element, which expands as a result of a heating of the expansion element and as a result effects the movement of the displacing element (40) into the reservoir (38)

4. Drive component (10) according to claim 2 or 3,
**characterised in that**
the operating element (42) has a higher heat expansion coefficient then the lubricant (22) and/or than the fluid (36).

5. Drive component (10) according to any of claims 2 to 4,
**characterised in that**
the operating element (42) is made of wax.

6. Drive component (10) according to any of the preceding claims,
**characterised in that**
the reservoir (38) is disposed at least partially below the intermediate chamber (32) in vehicle vertical direction.

7. Drive component (10) according to any of the preceding claims,
**characterised in that**
at least one spring element (48), for providing a spring force, which can be tensioned by the movement of the displacing element (40), is assigned to the displacement element (40) movable at least partially in a first direction into the reservoir (38), by means of which spring force the operating element (40) is movable in a second direction opposed to the first direction.

8. Drive component (10) according to any of the preceding claims,
**characterised in that**
at least one actuating member (42), self-sufficient with respect to energy sources of the rest of the vehicle, is provided by means of which the displacing element (40) is movable.

9. Drive component (10) according to any of the preceding claims,
**characterised in that**
the drive component (10) is designed as a transmission, in particular as an axle transmission.

10. Motor vehicle having at least one drive component (10) according to any of the preceding claims.

## Revendications

1. Composant d'entraînement (10) pour un véhicule automobile, avec au moins un espace de logement (12) pour des éléments de construction du composant d'entraînement (10), avec au moins une première paroi (16) délimitant au moins en partie l'espace de logement (12), par laquelle au moins une zone de collecte (20) pour la collecte d'un lubrifiant (22) pour la lubrification des éléments de construction est délimitée au moins en partie, et avec au moins une deuxième paroi (26) agencée sur un côté (28) opposé à la zone de collecte (22) de la première paroi (16), laquelle est espacée au moins dans une zone partielle de la première paroi (16), de sorte qu'un espace intermédiaire (32) délimité au moins en partie par les parois (16, 26) est formé entre les parois (16, 26), dans lequel un fluide (36) peut être introduit dans l'espace intermédiaire (32) et peut être évacué de l'espace intermédiaire (32) pour le réglage d'un coefficient de transfert thermique entre les parois (16, 26),
**caractérisé par** :
- au moins un réservoir (38) relié fluidiquement à l'espace intermédiaire (32) pour la réception du fluide (36) ; et
- au moins un élément de refoulement (40), lequel est déplaçable au moins en partie dans le réservoir (38) pour entraîner ainsi un refoulement d'au moins une partie du fluide (36) du réservoir (38) à l'espace intermédiaire (32).

2. Composant d'entraînement (10) selon la revendication 1,
**caractérisé en ce que**
au moins un élément d'actionnement (42) est prévu, dont la forme et/ou le volume est modifiable suite à un changement de température de l'élément d'actionnement (42), moyennant quoi le déplacement de l'élément de refoulement (40) dans le réservoir (38) peut être entraîné.

3. Composant d'entraînement (10) selon la revendication 2,
**caractérisé en ce que**
l'élément d'actionnement (42) est réalisé en tant qu'élément d'expansion, lequel se dilate suite à un échauffement de l'élément d'expansion et entraîne ainsi le déplacement de l'élément de refoulement (40) dans le réservoir (38)

4. Composant d'entraînement (10) selon la revendication 2 ou 3,
**caractérisé en ce que**
l'élément d'actionnement (42) présente un coefficient de dilatation thermique supérieur à celui du lubrifiant (22) et/ou du fluide (36).

5. Composant d'entraînement (10) selon l'une quelconque des revendications 2 à 4,
**caractérisé en ce que**
l'élément d'actionnement (42) est en cire.

6. Composant d'entraînement (10) selon l'une quelconque des revendications précédentes,
**caractérisé en ce que**
le réservoir (38) est agencé au moins en partie dans longueur longitudinale du véhicule en-dessous de l'espace intermédiaire (32).

7. Composant d'entraînement (10) selon l'une quelconque des revendications précédentes,
**caractérisé en ce que**
au moins un élément ressort (48) pouvant être tendu par le déplacement de l'élément de refoulement (40) est associé à l'élément de refoulement (40) déplaçable au moins en partie dans une première direction dans le réservoir (38) pour la mise à disposition d'une force ressort, au moyen de laquelle l'élément d'actionnement (40) est déplaçable dans une deuxième direction opposée à la première direction.

8. Composant d'entraînement (10) selon l'une quelconque des revendications précédentes,
**caractérisé en ce que**
au moins un organe de réglage (42) autonome de sources d'énergie du reste du véhicule est prévu, au moyen duquel l'élément de refoulement (40) est déplaçable.

9. Composant d'entraînement (10) selon l'une quelconque des revendications précédentes,
**caractérisé en ce que**
le composant d'entraînement (10) est réalisé en tant que transmission, en particulier en tant que transmission d'axe.

10. Véhicule automobile, avec au moins un composant d'entraînement (10) selon l'une quelconque des revendications précédentes.
